# EUROPEAN PATENT APPLICATION

(11) **EP 4 530 894 A1**
(43) Date of publication of application: **02.04.2025**
(21) Application number: 24191947.1
(22) Date of filing: 31.07.2024
(51) Int. Cl.: G06F 21/10, H04L 9/40, H04W 12/08, G06F 21/57, G06F 21/71, G06F 21/85, G06N 3/02, G06N 3/04, G06N 3/08

(54) **METHODS AND APPARATUS FOR SYSTEM FIREWALLS**

(30) Priority: 27.09.2023 US 202318476026
(71) Applicant: INTEL Corporation, Santa Clara, CA 95054 (US)
(72) Inventor: THYAGATURU, Akhilesh, Santa Clara, 95054 (US); HOWARD, Jason, Santa Clara, 95054 (US); ROSS, Nicholas, Santa Clara, 95054 (US); TAYAL, Sanjaya, Santa Clara, 95054 (US); GOPAL, Vinodh, Santa Clara, 95054 (US)
(74) Representative: Rummler, Felix

(57) **Abstract**

Systems, apparatus, articles of manufacture, and methods are disclosed to generate and manage a firewall policy. An example includes interface circuitry, machine readable instructions, and programmable circuitry to at least one of instantiate or execute the machine readable instructions to determine whether an operation is allowed to pass between a first component on a system-on-chip (SoC) and a second component on the SoC, detect an interconnect between the first component on the SoC and the second component on the SoC, cause the interconnect to filter the operation based on the determination of whether the operation is allowed to pass between the first component and the second component, and transmit a request to filter the operation based on the determination of whether the operation is allowed to pass between the first component and the second component.

## Description

### FIELD OF THE DISCLOSURE

This disclosure relates generally to computing device security and, more particularly, to methods and apparatus for system firewalls for improved security.

### BACKGROUND

In computing, security and privacy is important to ensure operations perform efficiently and effectively without interference. The lack of or insufficient security measures could leave applications vulnerable to cyber-attacks and data loss. Firewall policies attempt to reduce the risk of cyber-attacks and data loss by restricting operations.

### BRIEF DESCRIPTION OF THE DRAWINGS

FIG. 1 is a block diagram of an example computing environment in which an example firewall orchestrator operates to generate and manage firewall policies in a computing device.
FIG. 2 is a block diagram of an example implementation of the firewall orchestration circuitry of FIG. 1.
FIGS. 3-6 are flowcharts representative of example machine readable instructions and/or example operations that may be executed, instantiated, and/or performed by example programmable circuitry to implement the firewall orchestration circuitry of FIG. 2.
FIG. 7 is a block diagram of an example implementation of a firewall policy operating at an intra-chip level on an SoC.
FIG. 8A is an example table indicating firewall policy rules as applied to interconnects on a compute device.
FIG. 8B is an example table indicating resource limits of an operation on a compute device for which a firewall policy is to execute on.
FIG. 9 is a block diagram of an example processing platform including programmable circuitry structured to execute, instantiate, and/or perform the example machine readable instructions and/or perform the example operations of FIGS. 3-6 to implement the firewall orchestration circuitry of FIG. 2.
FIG. 10 is a block diagram of an example implementation of the programmable circuitry of FIG. 9.
FIG. 11 is a block diagram of another example implementation of the programmable circuitry of FIG. 9.

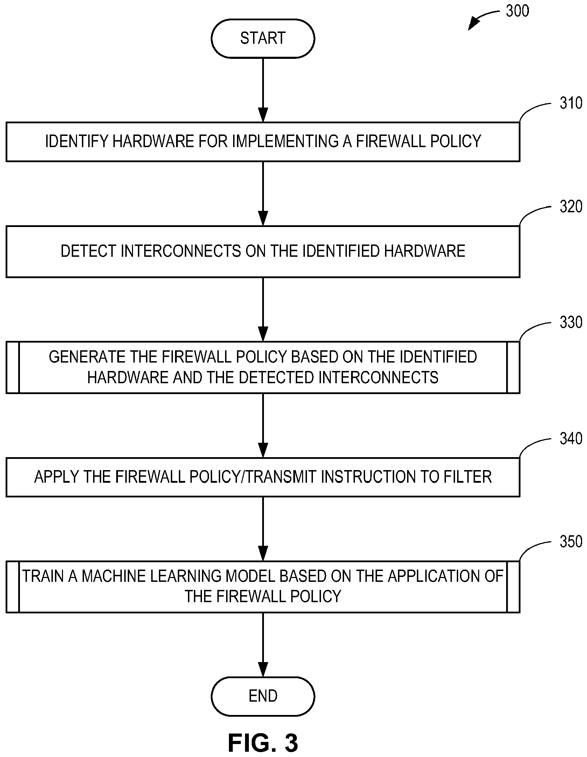

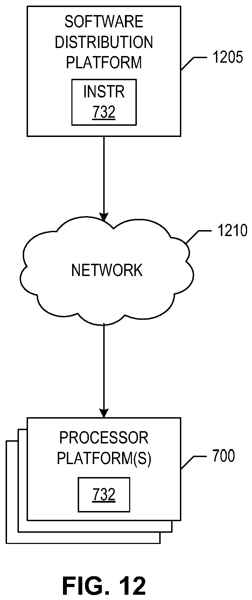

FIG. 12 is a block diagram of an example software/firmware/instructions distribution platform (e.g., one or more servers) to distribute software, instructions, and/or firmware (e.g., corresponding to the example machine readable instructions of FIGS. 3-6) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

### DETAILED DESCRIPTION

Firewall policies attempt to reduce the risk of cyber-attacks and data loss by restricting operations (e.g., by limiting or preventing performance of the operations). Some hardware devices (e.g., CPUs, GPUs, XPUs, etc.) include interconnects that link components within the hardware devices (e.g., core-to-core, core-to-memory, etc.). Methods and apparatus disclosed herein generate a firewall policy which can be deployed at the interconnect level and above to provide a more robust and agnostic approach to generating and deploying firewall policies. Some example implementations provide an orchestrator to define, request, and influence system wide firewall features for applications, virtual machines, containers, etc. to provide security and privacy for a workload. Some examples includes software-defined mechanisms and platforms to support platform-wide analysis and firewall policy configurations.

In some examples, resources available on a platform can expose firewall functions as part of inter-component functions such as bus operations and Peripheral Component Interconnect Express (PCIe) device functions. Methods and apparatus disclosed herein register/correlate with the bus functions and/or PCIe device functions to be able to reconfigure/protect those functions. Example implementations provide a platform to generate firewall security measures/policies to reconfigure the interactions between hardware components and to generate/maintain a list of approved operations/transactions that can occur between the hardware components.

Some methods and apparatus disclosed herein provide protection for data through a system-wide firewall environment, where each application is granted a specific set of operations across all compute and interconnect elements, such that, compute functions (e.g., read-writes to memory) are limited to a select (e.g., preapproved) set of functions. As a result, an application of interest, an interfering application that is local to the same host, and an I/O device (e.g., an accelerator) that has access to the application of interest, or a network agent, and other entities such OS kernel can only perform actions that are permitted for their use.

For example, a tele-medicine network flow may pass through a network node undergoing processing over intermediate nodes implementing various network functions. While the system performs operations on the data of the tele-medicine network flow, the data is typically unprotected during compute operations, which leads to security and privacy vulnerabilities. However, example methods and apparatus disclosed herein may provide protection to limit access such that even kernel or hypervisor processes and threads do not have access to the assigned resources such as, changing process priorities, scheduling intervals, and accessing the memory regions used by the applications until the resources are yielded by the application ensuring a heightened level of security and privacy.

In some examples disclosed herein, a firewall orchestration circuitry controls the fundamental hardware transactions, and software processing of an application down to the thread-level and/or the process-level (e.g., such control may mean that there no additional isolation is required by the software entities, such as the kernel, hypervisors, etc.). In other words, if there are sufficient firewall rules in the system at the hardware and software resources, no additional isolation may be required. Some methods and apparatus disclosed herein enable applications, virtual machines (VMs), Containers, and orchestrators to define, request, and/or influence system-wide firewall features that can heighten security and privacy for a given workload (e.g., utilizing software defined mechanisms and platform wide configurations).

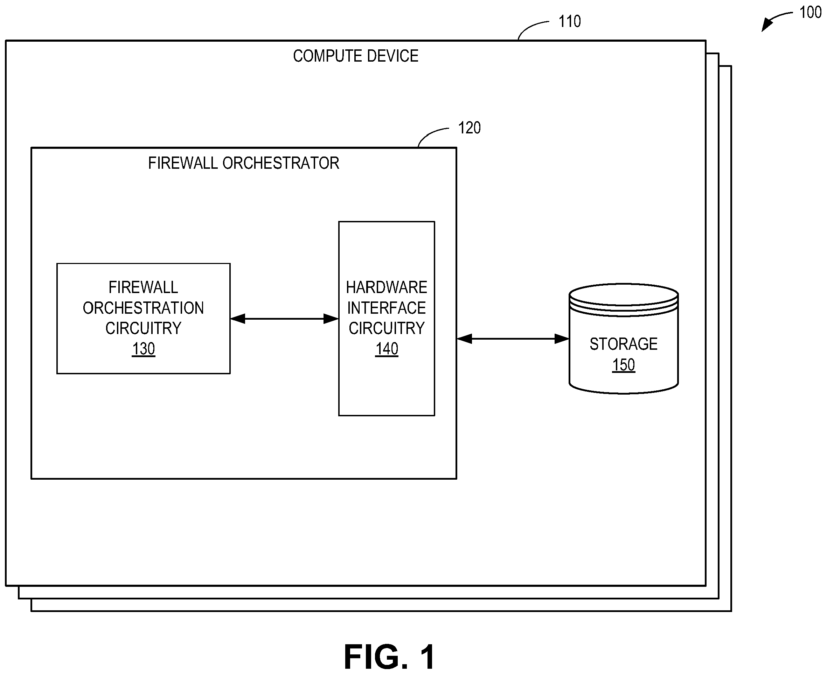

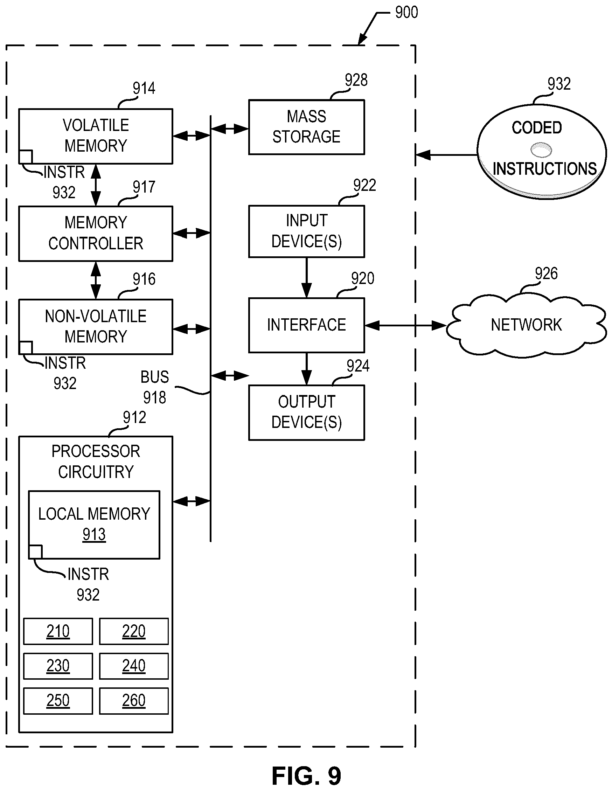

FIG. 1 is a block diagram of an example computing environment 100 in which an example firewall orchestrator 120 operates to generate and manage firewall policies in a computing device. The example computing environment 100 includes an example compute device 110. In some examples, the example computing environment 100 includes a plurality of compute devices 110. For example, multiple compute device 110 may be included in a data center, a cloud computing environment, etc. An example compute device that may implement the example computer device 110 is described in conjunction with at least FIG. 9.

The example compute device 110 of FIG. 1 includes a firewall orchestrator 120 and a storage 150. The example firewall orchestrator 120 includes example firewall orchestration circuitry 130 and example hardware interface circuitry 140.

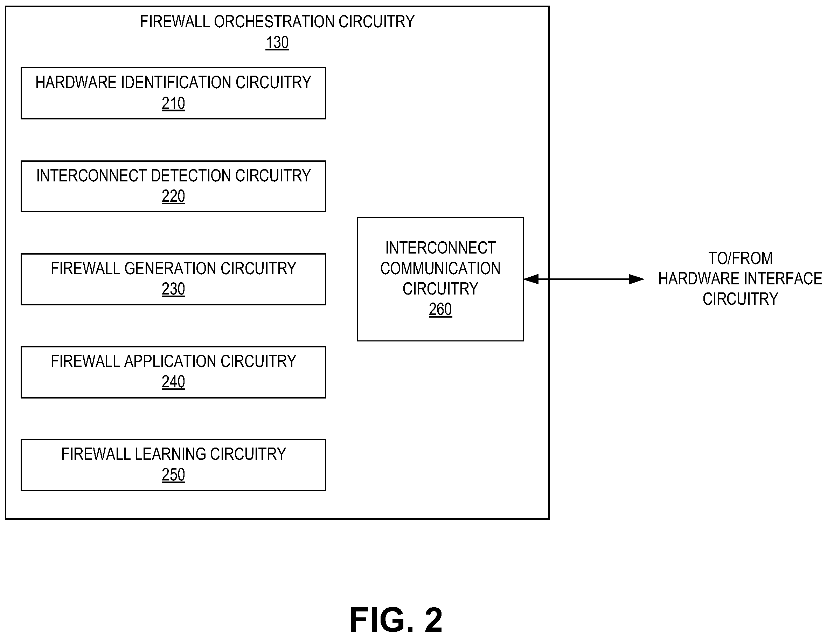

The example firewall orchestration circuitry 130 manages firewall rules (e.g., inter-component firewall rules) for the compute device 110. The example firewall orchestration circuitry provides a central management that can recognize a workload and control firewall policies based on characteristics of the workload, historical operations of the workload, etc. The operation of the firewall orchestration circuitry 130 is described in further detail in conjunction with FIGS. 2-6.

In some examples, the firewall orchestration circuitry 130 is instantiated by programmable circuitry executing firewall orchestration instructions and/or configured to perform operations such as those represented by the flowchart(s) of FIGS. 3-6.

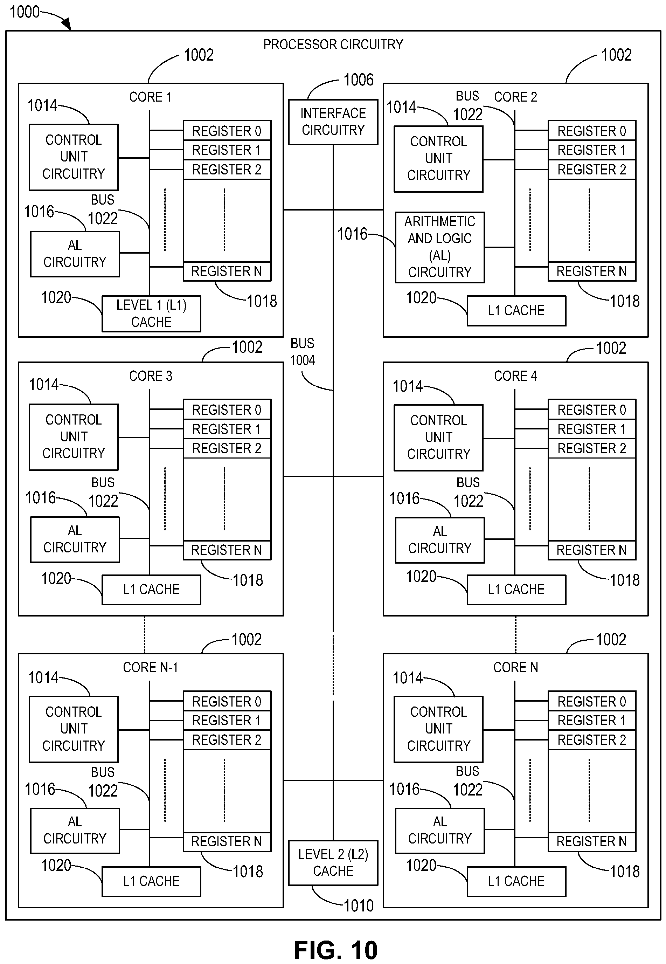

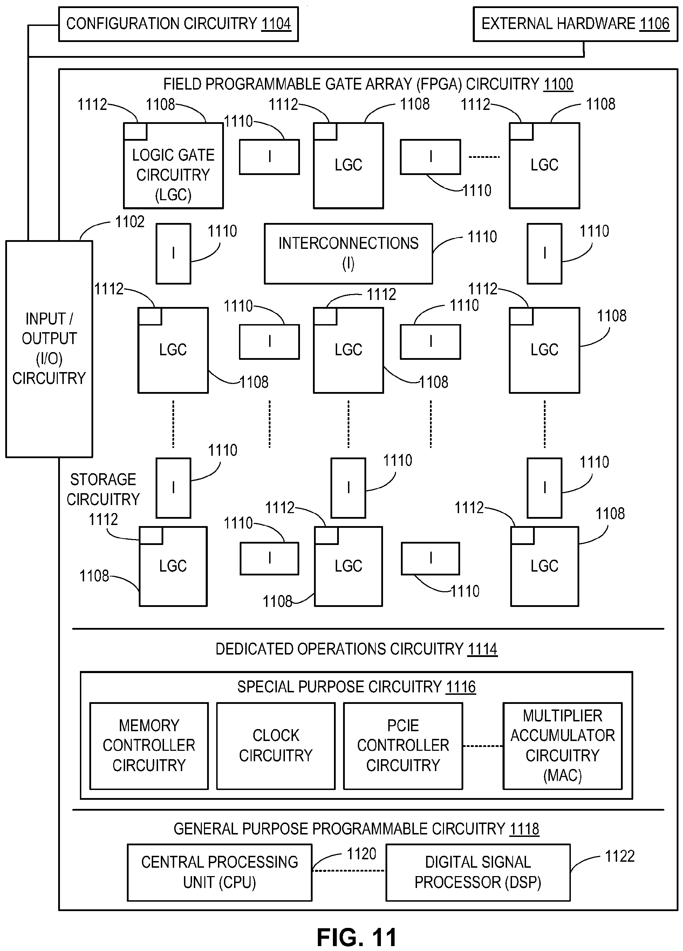

In some examples, the firewall orchestrator 120 includes means for firewall orchestration. For example, the means for firewall orchestration may be implemented by the firewall orchestration circuitry 130. In some examples, the firewall orchestration circuitry 130 may be instantiated by programmable circuitry such as the example programmable circuitry 912 of FIG. 9. For instance, the firewall orchestration circuitry 130 may be instantiated by the example microprocessor 1000 of FIG. 10 executing machine executable instructions such as those implemented by at least some of the blocks FIGS. 3-6. In some examples, firewall orchestration circuitry 130may be instantiated by hardware logic circuitry, which may be implemented by an ASIC, XPU, or the FPGA circuitry 1100 of FIG. 11 configured and/or structured to perform operations corresponding to the machine readable instructions. Additionally or alternatively, the firewall orchestration circuitry 130 may be instantiated by any other combination of hardware, software, and/or firmware. For example, the firewall orchestration circuitry 130 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example hardware interface circuitry 140 communicatively couples the firewall orchestration circuitry 130 to the storage 150 and the computing resources of the compute device 110 (e.g., processor(s), memory, interfaces, etc.). The example hardware interface circuitry 140 is a wired data connection such as a Serial Advanced Technology Attachment (SATA) connection, controller area network (CAN) connection, or any other kind of wired or wireless data connection link. In some examples, the hardware interface circuitry 140 controls the data communication between the firewall orchestration circuitry 130 and the storage 150 to reduce computational resources needed by the firewall orchestration circuitry 130. In other examples, the hardware interface circuitry 140 is integrated with the firewall orchestration circuitry 130.

The example storage 150 is a database storing firewall policies and/or additional data pertinent to the operation of the firewall orchestrator such as application information, information about an operating environment of the compute device 110, etc.

In operation, the firewall orchestrator 120 analyzes the compute device 110 to determine hardware present on the compute device 110, determine where to apply firewall policies, etc. In some examples, the firewall policy is applied to the hardware via the hardware interface circuitry 140. The firewall orchestrator 120 stores information by communicating with the storage 150 to maintain records of previous iterations of firewall policies, attempted cyber-attacks, etc.

The firewall orchestrator 120 analyzes the hardware on the compute device 110 to detect interconnects present. In examples disclosed herein, the interconnects are hardware connections that connect components on a system-on-chip (SoC). These interconnects allow operations to execute between components on the SoC, and the firewall orchestrator 120 determines where interconnects are present and the components that the interconnects communicate with (e.g., CPU core to memory, CPU core to CPU core, etc.).

The firewall policy generated by the firewall orchestrator 120 allows or restricts operations from executing at the interconnects. In some examples, the firewall policy is generated through the analysis of the interconnects on the compute device 110. In other examples, the firewall policy has already been generated and one or more operations have already executed on the compute device 110 through the interconnects. In such an example, the firewall policy is regenerated by analyzing the execution of the one or more operations on the compute device 110. Such an analysis may be accomplished through the use of a machine learning model to determine which operations are to be restricted/allowed.

An example system of compute devices 110 may be present. In such a system, each compute device 110 includes a firewall orchestrator 120 for performing the firewall policy. In some examples, each compute device 110 includes a different firewall policy for performing based on the applications to be executed on the compute device 110. In other examples, each compute device 110 includes the same firewall policy applied to each compute device 110.

Platform resources (e.g., memory availability, CPU utilization, etc.) on the compute device 110 may expose firewall functions as part of compute agents, bus functions, and PCIe device functions. Example BIOS agents, Unified Extensible Firmware Interface (UEFI) architectures, applications, orchestrators, and OS and Hypervisor services register with the compute device(s) 110, bus functions, and PCIe devices function for platform reconfiguration (e.g., generation/re-generation of firewall policies).

Applications, VMs, and containers interact with the firewall policies running on the compute device 110 (e.g., the OS/Hypervisors), and make requests to the hardware firewall functions to allow or restrict certain operations. Firewall functions can be from multiple parties/sources who design the hardware, and hence can be in the form of heterogenous functions. Each hardware function can have its own firewall capabilities that are utilized to enforce the isolation, security, and privacy features.

BIOS, UEFI, and device specific drivers can interact with orchestrators, applications, and OS agents to determine the configurations needed for firewall policy enforcement. Interfaces within the hardware (e.g., Advanced Configuration and Power Interface (ACPI)) can be extended (e.g., added, modified, exchanged, etc.) to interact with the hardware firewall function to enforce the policies on the hardware, along with the reconfiguration of the hardware policies. Such functionality enables transparent firewall operations such that the transactions and operations are contained to lists of permitted operations. In some examples, the firewall policies can execute a compile-time extraction of a dependency graph on the transactions and compute operations.

FIG. 2 is a block diagram of an example implementation of the firewall orchestration circuitry 130 of FIG. 1 to generate and manage firewall policies within the compute device 110. The firewall orchestration circuitry 130 of FIG. 2 may be instantiated (e.g., creating an instance of, bring into being for any length of time, materialize, implement, etc.) by programmable circuitry such as a Central Processor Unit (CPU) executing first instructions. Additionally or alternatively, the firewall orchestration circuitry 130 of FIG. 2 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. Moreover, in some examples, some or all of the circuitry of FIG. 2 may be implemented by microprocessor circuitry executing instructions and/or FPGA circuitry performing operations to implement one or more virtual machines and/or containers.

Component dependency can be evaluated by a hardware and software profiler on the OS, such that the application-specific dependency can be evaluated. Based on certain dependency factors, firewall rules and policies can be generated. These policies are learned for each application during run-time, and the firewall learning circuitry 250 recommends the learned firewall policies for the firewall orchestrator and OS management function to adopt.

Components (e.g., processors, interconnects, interfaces, I/O devices, memory, etc.) are expected to follow generated software-defined principles, where the existing rules and polices are reported to management software agents, where the policies are re-evaluated and tracked, and reports metrics to the orchestration services for application-level control and feedback based on the implementation of the firewall policy.

Components are able to accept, reject, or ask for reconfiguration based on component capabilities. In some examples disclosed herein, generating and/or applying firewall policies is not restricted by a dominant factor such as the entire flow being based on core behavior, or component behavior, but rather is evaluated in a connected and related manner. The relationship can be learned by learning the relative characteristics of time-series data of each individual component.

The firewall orchestration circuitry 130 includes hardware identification circuitry 210, interconnect detection circuitry 220, firewall generation circuitry 230, firewall application circuitry 240, firewall learning circuitry 250, and interconnect communication circuitry 260.

The hardware identification circuitry 210 identifies hardware within the computing device 110 for performing an operation and/or implementing a firewall policy. In some examples, the hardware identification circuitry 210 is instantiated by programmable circuitry executing hardware identification instructions and/or configured to perform operations such as those represented by the flowchart(s) of FIG. 3.

In some examples, the firewall orchestration circuitry 130 includes means for identifying hardware within a computing device. For example, the means for identifying may be implemented by hardware identification circuitry 210. In some examples, the hardware identification circuitry 210 may be instantiated by programmable circuitry such as the example programmable circuitry 912 of FIG. 9. For instance, the hardware identification circuitry 210 may be instantiated by the example microprocessor 1000 of FIG. 10 executing machine executable instructions such as those implemented by at least block 310 of FIG. 3. In some examples, the hardware identification circuitry 210 may be instantiated by hardware logic circuitry, which may be implemented by an ASIC, XPU, or the FPGA circuitry 1100 of FIG. 11 configured and/or structured to perform operations corresponding to the machine readable instructions. Additionally or alternatively, the hardware identification circuitry 210 may be instantiated by any other combination of hardware, software, and/or firmware. For example, the hardware identification circuitry 210 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The interconnect detection circuitry 220 detects interconnects within the identified hardware from the hardware identification circuitry 210. In some examples, the interconnect detection circuitry 220 is instantiated by programmable circuitry executing interconnect detection instructions and/or configured to perform operations such as those represented by the flowchart(s) of FIG. 3.

In some examples, the firewall orchestration circuitry 130 includes means for detecting interconnects within the identified hardware. For example, the means for detecting may be implemented by interconnect detection circuitry 220. In some examples, the interconnect detection circuitry 220 may be instantiated by programmable circuitry such as the example programmable circuitry 912 of FIG. 9. For instance, the interconnect detection circuitry 220 may be instantiated by the example microprocessor 1000 of FIG. 10 executing machine executable instructions such as those implemented by at least block 320 of FIG. 3. In some examples, the interconnect detection circuitry 220 may be instantiated by hardware logic circuitry, which may be implemented by an ASIC, XPU, or the FPGA circuitry 1100 of FIG. 11 configured and/or structured to perform operations corresponding to the machine readable instructions. Additionally or alternatively, the interconnect detection circuitry 220 may be instantiated by any other combination of hardware, software, and/or firmware. For example, the interconnect detection circuitry 220 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The firewall generation circuitry 230 generates a firewall policy for an application. In some examples, the firewall generation circuitry 230 is instantiated by programmable circuitry executing firewall generation instructions and/or configured to perform operations such as those represented by the flowchart(s) of FIGS. 3, 4, and/or 5.

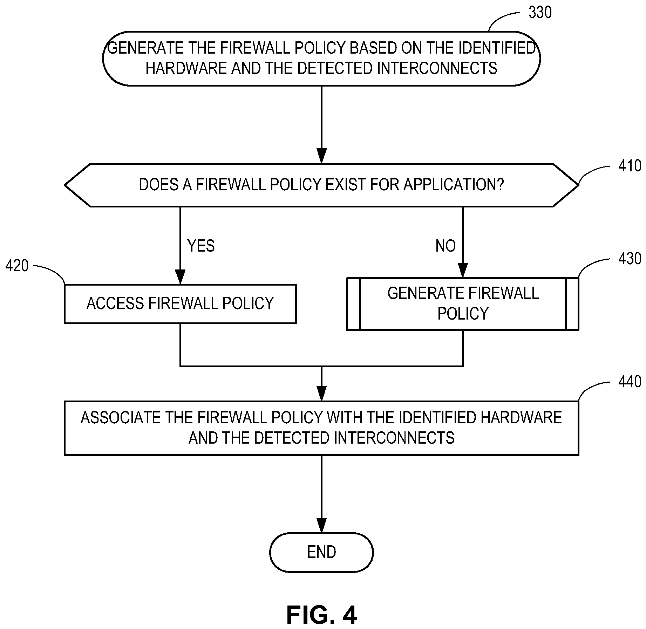

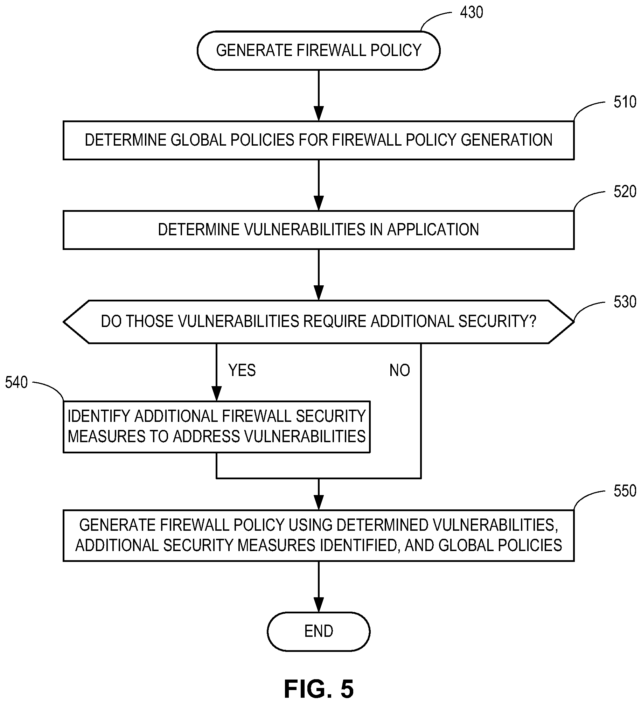

In some examples, the firewall orchestration circuitry 130 includes means for generating a firewall policy for an application. For example, the means for generating may be implemented by firewall generation circuitry 230. In some examples, the firewall generation circuitry 230 may be instantiated by programmable circuitry such as the example programmable circuitry 912 of FIG. 9. For instance, the firewall generation circuitry 230 may be instantiated by the example microprocessor 1000 of FIG. 10 executing machine executable instructions such as those implemented by at least block 330 of FIG. 3, blocks 410, 420, 430, and 440 of FIG. 4, and blocks 510, 520, 530, 540, and 550 of FIG. 5. In some examples, the firewall generation circuitry 230 may be instantiated by hardware logic circuitry, which may be implemented by an ASIC, XPU, or the FPGA circuitry 1100 of FIG. 11 configured and/or structured to perform operations corresponding to the machine readable instructions. Additionally or alternatively, the firewall generation circuitry 230 may be instantiated by any other combination of hardware, software, and/or firmware. For example, the firewall generation circuitry 230 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The firewall application circuitry 240 determines whether an operation is allowed to pass between a first component and a second component on compute device 110 (e.g., a first component on an SoC and a second component on the SoC). In some examples, the firewall application circuitry 240 is instantiated by programmable circuitry executing firewall application instructions and/or configured to perform operations such as those represented by the flowchart(s) of FIG. 3.

In some examples, the firewall orchestration circuitry 130 includes means for determining whether an operation is allowed to pass between a first component on an SoC and a second component on the SoC. For example, the means for determining may be implemented by firewall application circuitry 240. In some examples, the firewall application circuitry 240 may be instantiated by programmable circuitry such as the example programmable circuitry 912 of FIG. 9. For instance, the firewall application circuitry 240 may be instantiated by the example microprocessor 1000 of FIG. 10 executing machine executable instructions such as those implemented by at least block 340 of FIG. 3. In some examples, the firewall application circuitry 240 may be instantiated by hardware logic circuitry, which may be implemented by an ASIC, XPU, or the FPGA circuitry 1100 of FIG. 11 configured and/or structured to perform operations corresponding to the machine readable instructions. Additionally or alternatively, the firewall application circuitry 240 may be instantiated by any other combination of hardware, software, and/or firmware. For example, the firewall application circuitry 240 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

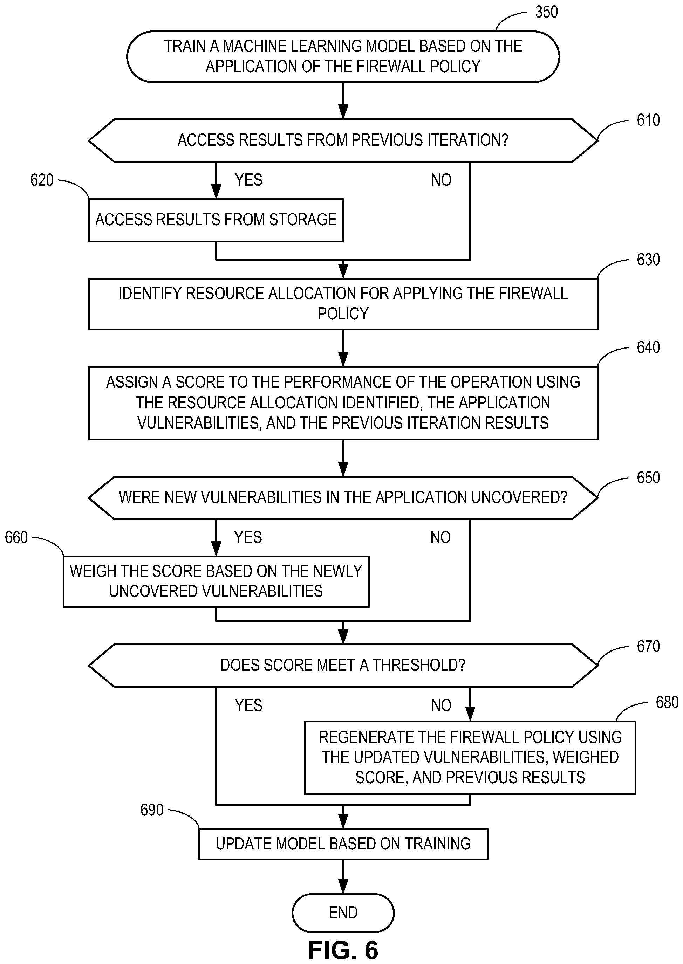

The firewall learning circuitry 250 trains a machine learning model based on the performance/execution of the operation. In some examples, the firewall learning circuitry 250 is instantiated by programmable circuitry executing firewall learning instructions and/or configured to perform operations such as those represented by the flowchart(s) of FIGS. 3 and/or 6.

In some examples, the firewall orchestration circuitry 130 includes means for training a machine learning model based on the execution/performance of the operation. For example, the means for training may be implemented by firewall learning circuitry 250. In some examples, the firewall learning circuitry 250 may be instantiated by programmable circuitry such as the example programmable circuitry 912 of FIG. 9. For instance, the firewall learning circuitry 250 may be instantiated by the example microprocessor 1000 of FIG. 10 executing machine executable instructions such as those implemented by at least block 350 of FIG. 3 and blocks 610, 620, 630, 640, 650, 660, 670, 680, and 690 of FIG. 6. In some examples, the firewall learning circuitry 250 may be instantiated by hardware logic circuitry, which may be implemented by an ASIC, XPU, or the FPGA circuitry 1100 of FIG. 11 configured and/or structured to perform operations corresponding to the machine readable instructions. Additionally or alternatively, the firewall learning circuitry 250 may be instantiated by any other combination of hardware, software, and/or firmware. For example, the firewall learning circuitry 250 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The interconnect communication circuitry 260 transmits an instruction to the interconnects detected to filter the operation. In some examples, the interconnect communication circuitry 260 is instantiated by programmable circuitry executing interconnect communication instructions and/or configured to perform operations such as those represented by the flowchart(s) of FIG. 3.

In some examples, the firewall orchestration circuitry 130 includes means for transmitting an instruction to filter the operation. For example, the means for transmitting may be implemented by interconnect communication circuitry 260. In some examples, the interconnect communication circuitry 260 may be instantiated by programmable circuitry such as the example programmable circuitry 912 of FIG. 9. For instance, the interconnect communication circuitry 260 may be instantiated by the example microprocessor 1000 of FIG. 10 executing machine executable instructions such as those implemented by at least block 340 of FIG. 3. In some examples, the interconnect communication circuitry 260 may be instantiated by hardware logic circuitry, which may be implemented by an ASIC, XPU, or the FPGA circuitry 1100 of FIG. 11 configured and/or structured to perform operations corresponding to the machine readable instructions. Additionally or alternatively, the interconnect communication circuitry 260 may be instantiated by any other combination of hardware, software, and/or firmware. For example, the interconnect communication circuitry 260 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

While an example manner of implementing the firewall orchestration circuitry 130 of FIG. 1 is illustrated in FIG. 2, one or more of the elements, processes, and/or devices illustrated in FIG. 2 may be combined, divided, re-arranged, omitted, eliminated, and/or implemented in any other way. Further, the example hardware identification circuitry 210, example interconnect detection circuitry 220, example firewall generation circuitry 230, example firewall application circuitry 240, example firewall learning circuitry 250, example interconnect communication circuitry 260, and/or, more generally, the example firewall orchestration circuitry 130 of FIG. 2, may be implemented by hardware alone or by hardware in combination with software and/or firmware. Thus, for example, any of the example hardware identification circuitry 210, example interconnect detection circuitry 220, example firewall generation circuitry 230, example firewall application circuitry 240, example firewall learning circuitry 250, example interconnect communication circuitry 260, and/or, more generally, the example firewall orchestration circuitry 130, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example firewall orchestration circuitry 130 of FIG. 2 may include one or more elements, processes, and/or devices in addition to, or instead of, those illustrated in FIG. 2, and/or may include more than one of any or all of the illustrated elements, processes and devices.

Resource firewalls span across hardware and software service components that an application can use to complete its task. In some implementations, a goal is to allow the application to run on a platform with all requirements met, while strictly enforcing the execution and transactions of the application.

Compute restrictions involve a finite set of instructions for the application to meet its requirements. Instructions may be validated before the application can be run on a given platform. For example, a CPU will not be able to initiate requests to an I/O device that is not preapproved or authorized for the transactions. The CPU will also not be able to request hardware reads and writes to both system memory, and I/O domain such as Memory-Mapped Input-Outputs (MMIOs). Such an approach may be applied to any type of computing environment such as an XPU domain or an I/O domain. The firewall functions for the compute device(s) 110 can involve function execution control, where the instructions are limited to certain executions, along with credit-based operations such that an application is allowed run the compute for the predetermined limits.

Software agents are responsible for analyzing workloads (e.g., application, VM, container, threads, function, processes, etc.) based on identifiers such as process ID, thread ID, context, and source ID and destination ID inside an interconnect. These identifiers may be tracked to analyze usage statistics and learn connectivity (connected graphs) and paths (linked lists) of individual workloads. In some examples, the firewall generation circuitry 230 utilizes a path identification process for generating the firewall rules by the management entities in the OS, hypervisors, and orchestrators.

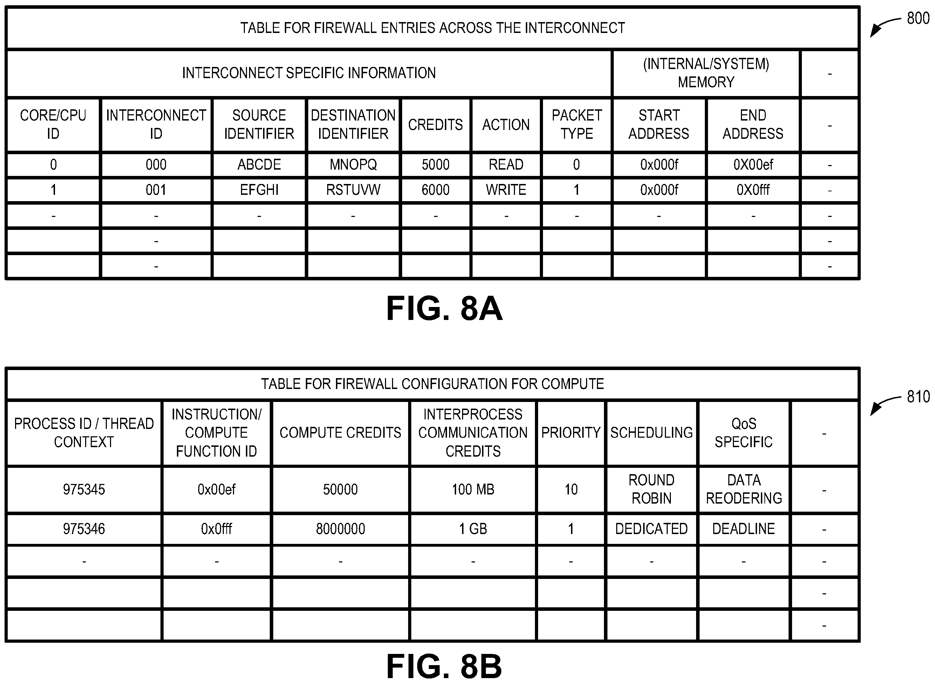

Resource limits are not only applicable to compute functions but also to the interconnects that connect the compute and memory functions in a system. The compute functions/transactions can range from standard PCIe interfaces to on-chip and chip-to-chip interconnects such as embedded multi-die interconnect bridge (EMIB). For each of these transactions there may be a standard source and destination identifier, packet identifiers, and action identifiers where the firewall functions can be enforced with limited design effort in the hardware. The example tables of FIGS. 8A and 8B provide example parameters that can be used as firewall actions to provide security and privacy. In some examples, performance gains may be achieved because the transactions are guaranteed to occur, and thus there is no congestion or interference to cause saturation.

Disclosed implementations may be utilized with virtualization technologies such as the single-root input/output virtualization (SR-IOV) and scalable input/output virtualization (S-IOV). In some such implementations , no additional hardware and software overhead is incurred for virtualization management.

Flowchart(s) representative of example machine readable instructions, which may be executed by programmable circuitry to implement and/or instantiate the firewall orchestration circuitry 130 of FIG. 2 and/or representative of example operations which may be performed by programmable circuitry to implement and/or instantiate the firewall orchestration circuitry 130 of FIG. 2, are shown in FIGS. 3-6. The machine readable instructions may be one or more executable programs or portion(s) of one or more executable programs for execution by programmable circuitry such as the programmable circuitry 912 shown in the example processor platform 900 discussed below in connection with FIG. 9 and/or may be one or more function(s) or portion(s) of functions to be performed by the example programmable circuitry (e.g., an FPGA) discussed below in connection with FIGS. 10 and/or 11. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 3-6, many other methods of implementing the example firewall orchestration circuitry 130 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 3-6 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, and/or activities, the phrase "at least one of A and B" is intended to refer to implementations including any of (1) at least one A, (2) at least one B, or (3) at least one A and at least one B. Similarly, as used herein in the context of describing the performance or execution of processes, instructions, actions, and/or activities, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

FIG. 3 is a flowchart representative of example machine readable instructions and/or example operations 300 that may be executed, instantiated, and/or performed by programmable circuitry to generate and manage firewall policies on a compute device. The example machine-readable instructions and/or the example operations 300 of FIG. 3 begin at block 310, at which the hardware identification circuitry 210 identifies hardware on the compute device 110 for implementing a firewall policy. In some examples, the hardware identified on the computer device 110 includes hardware capable of executing a firewall policy (e.g., a CPU, SoC, or any other kind of component capable of receiving and executing instructions). In examples disclosed herein, the hardware identified on the compute device 110 leads to a determination of where a firewall policy can be applied (e.g., the firewall policy is applied at the identified hardware). In such examples, the firewall policy operates/executes at the hardware for restricting/allowing operations to occur.

Once the hardware identification circuitry 210 identifies the hardware for implementing the firewall policy, the interconnect detection circuitry 220 detects interconnects on the identified hardware. (Block 320). In some examples, interconnects are hardware paths for transferring data between two pieces of hardware. Such examples act as a "toll" or a "security checkpoint" where an operation that is scheduled to execute/perform is verified to either allow or restrict the operation from performing. In some examples, the interconnect detection circuitry 220 queries the compute device 110 to detect the interconnects (e.g., the compute device 110 returns a location/status/etc. for the interconnects). In some examples, the hardware identified does not have interconnects, and the determination of not having interconnects assists in determining a proper firewall policy to generate to ensure improved security.

Once the interconnect detection circuitry 220 identifies the interconnects on the identified hardware, the firewall generation circuitry 230 generates the firewall policy based on the identified hardware and the detected interconnects. (Block 330). In some examples, the firewall policy is generated based on the understanding that some hardware lacks interconnects and may be generated to alleviate potential security risks by placing additional security checks based on the lack of interconnects. In other examples, where the interconnects do exist, the firewall policy is generated to take advantage of those interconnects to screen/filter operations from performing. An example process to implement block 330 is described in conjunction with FIG. 4.

Once the firewall generation circuitry 230 generates the firewall policy, the firewall application circuitry 240 applies the firewall policy to the identified hardware. (Block 340). In some examples, the firewall policy is applied by storing the policy in memory (e.g., local memory to a system-on-chip (SoC), RAM, SSD, HDD, etc.) to be accessed by the SoC when the operation is to perform. In other examples, the SoC accesses the firewall policy from a global storage (e.g., the storage 150) when the operation is to perform. In some examples, the firewall application circuitry 240 determines whether the operation is allowed to pass through the interconnect. Such a determination includes the amount/quantity of computing resources available, whether an unauthorized transaction/operation has been detected, etc.

In some examples, applying the firewall policy includes transmitting an instruction to the identified hardware to filter the operation. In such an example, the interconnect communication circuitry 260 transmits the instruction to the identified hardware to either allow or restrict the operation from performing.

Once the firewall application circuitry 240 and the interconnect communication circuitry 260 applies the firewall policy, the firewall learning circuitry 250 trains a machine learning model by analyzing the application of the firewall policy. (Block 350). In some examples, the machine learning model is trained to assist the firewall generation circuitry 230 in generating subsequent firewall policies. In some such examples, the firewall learning circuitry 250 monitors/analyzes the performance of the operation to determine whether the existing firewall policy is to change.

FIG. 4 is a flowchart representative of example machine readable instructions and/or example operations that may be executed, instantiated, and/or performed by programmable circuitry to identify whether to generate a firewall policy. The example machine-readable instructions and/or the example operations of FIG. 4 begin at block 410, at which the firewall generation circuitry 230 determines whether a firewall policy exists for the application that is to perform. In some examples, a firewall policy already exists for an application, whether the firewall policy was previously generated or is based on a template (e.g., a predefined list of allowable operations such as a whitelist).

When the firewall generation circuitry 230 determines that a firewall policy already exists (e.g., block 410 returns a result of YES), the firewall generation circuitry 230 accesses the firewall policy. (Block 420). In some examples, the firewall policy is stored in the storage 150 and is thereafter accessed via the storage 150.

When the firewall generation circuitry 230 determines that a firewall policy does not exist (e.g., block 410 returns a result of NO), the firewall generation circuitry 230 generates a firewall policy. (Block 430). In some examples, the generation of the firewall policy is based on a predetermined template or whitelist of restricted/approved operations. In other examples, all operations are restricted until the firewall policy is generated.

Once the firewall generation circuitry 230 accesses the firewall policy or generates a new firewall policy, the firewall generation circuitry 230 associates the firewall policy with the identified hardware and the detected interconnects. (Block 440). In some examples, the firewall policy is generated based on the identified hardware and detected interconnects, and the firewall policy is to be associated (e.g., matched up/correlated/linked/etc.) with the identified hardware and detected interconnects to ensure the firewall policy operates on the appropriate hardware/interconnects.

FIG. 5 is a flowchart representative of example machine readable instructions and/or example operations that may be executed, instantiated, and/or performed by programmable circuitry to generate a firewall policy. The example machine-readable instructions and/or the example operations of FIG. 5 begin at block 510, at which the firewall generation circuitry 230 determines global policies for firewall generation. In some examples, an application includes global policies that include predefined allowable/restricted operations, and the firewall policy can take advantage of those global policies to generate the firewall policy.

Once the firewall generation circuitry 230 determines the global policies, the firewall generation circuitry 230 determines whether the application has vulnerabilities/weaknesses that could make the application susceptible to attacks (e.g., cyberattacks). (Block 520). In some examples, vulnerabilities include lack of security in read/write operations, lack of restrictions for parallel operations (e.g., writing data to multiple destinations at once), or any other form of operation.

Once the firewall generation circuitry 230 determines whether the application has vulnerabilities/weaknesses, the firewall generation circuitry 230 determines whether those vulnerabilities require additional security measures. (Block 530). In some examples, an identification of a lack of restriction on parallel operations (e.g., reading/writing data to multiple destinations/sources at the same time) requires a dedicated firewall policy to restrict such operations. In other examples, the application is incapable of performing parallel operations (or other types of operations) and a dedicated firewall policy to restrict such operations is not required.

When the firewall generation circuitry 230 determines that the vulnerabilities require additional security measures (e.g., block 530 returns a result of YES), the firewall generation circuitry 230 identifies additional firewall security measures to address the vulnerabilities/weaknesses. (Block 540). Some such security measures may include restricting certain operations, adding/removing certain operations from the template/whitelisted operations, providing a notice when a certain operation is performed, etc.

Once the firewall generation circuitry 230 identifies the additional security measures or when the firewall generation circuitry 230 determines that the vulnerabilities/weaknesses do not require additional security measures (e.g., block 530 returns a result of NO), the firewall generation circuitry 230 generates the firewall policy based on the determined vulnerabilities, the identifies additional security measures, and the determined global policies. (Block 550). In some examples, the generated firewall policy is stored in the storage 150 for the identified hardware to access when the operation is to perform. In other examples, the firewall policy is stored local to the SoC (e.g., in a memory module).

FIG. 6 is a flowchart representative of example machine readable instructions and/or example operations that may be executed, instantiated, and/or performed by programmable circuitry to train a machine learning model for subsequent firewall policy generation. The example machine-readable instructions and/or the example operations of FIG. 6 begin at block 610, at which the firewall learning circuitry 250 determines whether to access results from a previous iteration of the firewall policy. In some examples, results (such as whether any unauthorized operations were detected, latency in performing an operation using the firewall policy, etc.) are stored in the storage 150 after each iteration of the firewall policy is performed.

When the firewall learning circuitry 250 determines that the results are to be accessed (e.g., block 610 returns a result of YES), the firewall learning circuitry 250 accesses the results from the storage 150. (Block 620). In some examples, the results are used to determine whether the operation performed appropriately for the given application. Such a determination may include determining whether the operation performed according to system limitations (e.g., resource utilization, latency requirements, etc.).

Once the firewall learning circuitry 250 accesses the results from the storage 150 or when the firewall learning circuitry 250 determines that previous results are not to be accessed from the storage 150 (e.g., block 610 returns a result of NO), the firewall learning circuitry 250 identifies the resources allocated for applying the firewall policy. (Block 630). In some examples, the firewall policy is to use a predefined amount/quantity of computing resources (e.g., CPU percentage, RAM bandwidth, etc.) and the efficiency of a given application is based on the resources used.

Once the firewall learning circuitry 250 identifies the resources allocated for applying the firewall policy, the firewall training circuitry 250 assigns a score to the performance of the operation. (Block 640). In some examples, the firewall learning circuitry 250 calculates a score based on the resources allocated, the application vulnerabilities/weaknesses, and/or the previous iteration results. Additional factors may be included in the score calculation that assess the success/efficiency of the firewall policy applied to the operation.

Once the firewall learning circuitry 250 assigns a score to the performance of the operation based on the firewall policy, the firewall learning circuitry 250 determines whether new vulnerabilities in the application were uncovered during the performance of the operation. (Block 650), In some examples, performance of the operation reveals previously unknown vulnerabilities/weaknesses that were not accounted for in generating the firewall policy. Such newly discovered vulnerabilities may be discovered due to a malicious attack being detected, an unauthorized operation being performed, etc. Such examples may require a regeneration of the firewall policy.

When the firewall learning circuitry 250 determines that new vulnerabilities were uncovered (e.g., block 650 returns a result of YES), the firewall learning circuitry 250 weighs the assigned score based on the newly uncovered vulnerabilities. (Block 660). In some examples, where the newly uncovered vulnerabilities present a security risk, the score may be weighed in favor of regenerating the firewall policy to improve security. In other examples, where the newly uncovered vulnerabilities do not present a security risk, the score may be weighed against regenerating the firewall policy to save computing resources.

Once the score is weighed based on the newly uncovered vulnerabilities or when the firewall learning circuitry 250 determines that no new vulnerabilities were uncovered (e.g., block 650 returns a result of NO), the firewall learning circuitry 250 determines whether the final score meets a given threshold. (Block 670). In some examples, the threshold defines whether the firewall policy is regenerated. In some examples, the threshold is dynamically set based on the scale of the score, the global policies, the given application, etc.

When the firewall learning circuitry 250 determines that the score does not meet the threshold (e.g., block 670 returns a result of NO), the firewall learning circuitry 250 instructs the firewall generation circuitry 230 to regenerate the firewall policy. (Block 680). In some examples, the instruction to regenerate the firewall policy includes the newly uncovered vulnerabilities, the weighed score, and/or the previous results. However, additional factors may be included in the instruction to regenerate the firewall policy. In some examples, the instruction to regenerate the firewall policy includes instructing the firewall generation circuitry 230 to restrict a previously allowable operation based on the results of performing the firewall policy.

Once the instruction to regenerate the firewall policy is sent or when the firewall learning circuitry 250 determines that the score does meet the threshold (e.g., block 670 returns a result of YES), the firewall learning circuitry 250 updates the machine learning model based on the training sequence of FIG. 6. (Block 690). In some examples, the machine learning model is stored in the storage 150 and accessed whenever the example operations of FIG. 6 are performed, thereby updating and training the machine learning model whenever the learning sequence of FIG. 6 is performed.

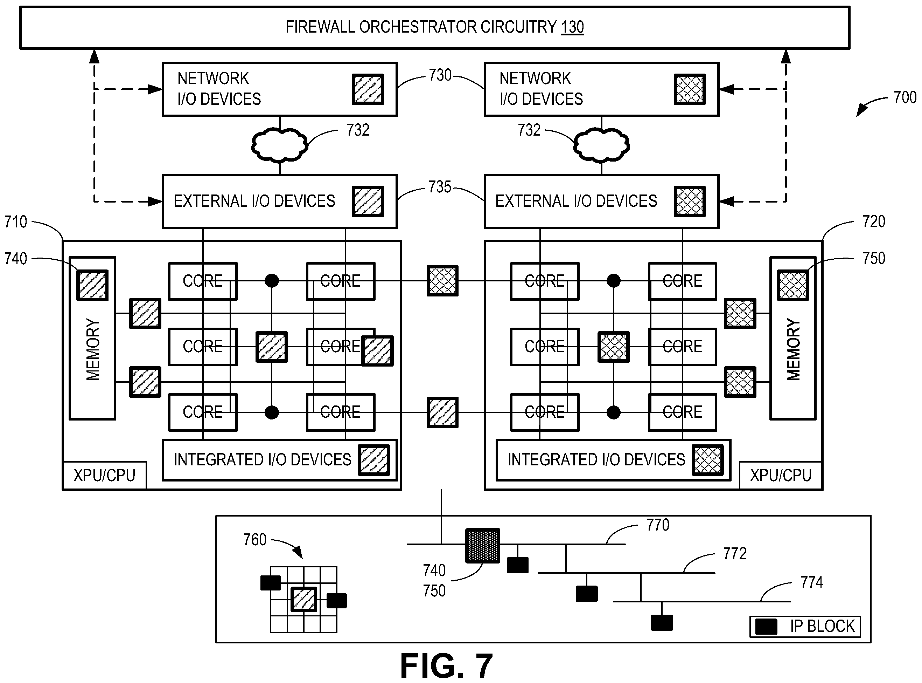

FIG. 7 is a block diagram of an example implementation of a firewall policy operating at an intra-chip level on an SoC 700. In the example implementation of FIG. 7, the SoC 700 includes a first XPU/CPU 710 and a second XPU/CPU 720. The first and second XPU/CPU 710, 720 communicate with the firewall orchestrator circuitry 130 either via a network input/output (I/O) device 730 using a network 732 or via an external I/O device 735.

The first XPU/CPU 710 includes first interconnects 740 (one of which is referenced in FIG. 7). The first interconnects 740 control intra-socket communication between components on the first XPU/CPU 710. In examples disclosed herein, the firewall policy applied to the SoC 700 determines whether operations are to execute at the first interconnects 740 (e.g., whether communication between the components on the first XPU/CPU 710 is allowable).

The second XPU/CPU 720 includes second interconnects 750 (one of which is referenced in FIG. 7). In some examples, the first interconnects 740 and the second interconnects 750 are the same (e.g., non-distinguishable in their function) and allow/restrict the same operations. In other examples, as shown in FIG. 7, the second interconnects 750 allow/restrict different operations for the second XPU/CPU 720 than the first interconnects 740 with the first XPU/CPU 710 respectively. In some examples, the second interconnects 750 are utilized at a different point in time than the first interconnects 740. Such examples indicate that when the firewall policy is applied to the SoC 700, the second interconnects 750 are not utilized. The second interconnects 750 are utilized once a subsequent firewall policy is generated to utilize the second interconnects 750.

In the example of FIG. 7, the first and second interconnects 740, 750 also control intra-socket communication (e.g., communication between the first and second XPU/CPU 710, 720 respectively).

In some examples, the SoC 700 includes additional chipsets. In the example of FIG. 7, the SoC 700 includes a network-on-chip (NoC) 760 that communicatively coupled with the first and/or second XPU/CPUs 710, 720, the, the network input/output device 730, or the external I/O device 735. The SoC 700 may include a hierarchy of busses. In the example of FIG. 7, the SoC 700 may include a primary bus 770, a secondary bus 772, a tertiary bus 774, and any additional busses for operably communicating with components within the SoC 700. Each bus 770, 772, 774 may include an individual interconnect 740, 750 or, as illustrated in FIG. 7, only the primary bus 770 includes an interconnect 740, 750 and the downstream busses rely on interconnect 740, 750 on the primary bus 770.

FIG. 8A is a first example table 800 indicating firewall policy rules as applied to interconnects on a compute device. In the first example table 800 of FIG. 8A, each processor and interconnect are given a unique identifier. These identifiers are used to determine whether the processor/interconnect are approved to perform an operation. If an operation is requested to be performed on an interconnect/processor and that operation is not approved (e.g., not on the whitelisted operations to execute), then the operation may be rejected from performing. Likewise, if an operation is requested to perform and the operation is a whitelisted operation to execute at an approved processor/interconnect, then the operation may be allowed to perform. The first example table 800 of FIG. 8 illustrates that each processor/interconnect is identifiable and the list of approved operations are correlated to the list of identifiable components that can execute the operation.

FIG. 8B is a second example table 810 indicating resource limits of an operation on a compute device for which a firewall policy is to execute on. In some examples, a compute device is limited in resources available for performing an operation. In such an example, processes can be organized by an amount of credits and a priority for executing such an operation. Credits ensure that every operation, every access to resources, and every transactions (including inter-process, inter-thread communication) is offered in a credit system, where each credit is permitted for a dedicated cause. A weight may be assigned to a combination of the credits and the priority to determine which operation should be executed/performed first. Especially in a computing environment where resources are limited, the weighting of performing operations improves security and ensures that more important security/firewall operations are executed first.

In some examples, a hacker can gain access to the system, for example, due to poor access credentials on the compute device 110 or by bypassing the system security protocols. Even where encryption is active on the compute device 110, a sufficient privilege of a compromised application can increase the risk of security throughout the entire system. Therefore, each access may be combined (or replaced) by a credit system. The credit system may ensure that operations, accesses to resources, transactions (e.g., including inter-process, inter-thread communication), etc. are offered in a credit system, where each credit is permitted for a dedicated cause. In such examples, even where a hacker gets access to the system, the hacker cannot copy, infer, or transfer data out of the system.

The implementation disclosed herein may a finite set of rules within interconnects and system components (e.g., the components in the compute device(s) 110). Such an implementation may eliminate the requirement of special encryption and decryption process which protects the data within a given system. As long as the access to the resources are fully regulated for both (1) an application of interest and (2) an attacker application, along with a credit-based approach, no additional security features may be required. For example, if a database read/write is combined with credits along with access control, security can be improved with more certainty. That is, even if, for example, a password is hacked, if the application do not have enough credits, the hacker cannot execute the instructions that are harmful.

FIG. 9 is a block diagram of an example programmable circuitry platform 900 structured to execute and/or instantiate the example machine-readable instructions and/or the example operations of FIGS. 3-6 to implement the firewall orchestration circuitry 130 of FIG. 2. The programmable circuitry platform 900 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a digital video recorder, a personal video recorder, a set top box, a headset (e.g., an augmented reality (AR) headset, a virtual reality (VR) headset, etc.) or other wearable device, or any other type of computing and/or electronic device.

The programmable circuitry platform 900 of the illustrated example includes programmable circuitry 912. The programmable circuitry 912 of the illustrated example is hardware. For example, the programmable circuitry 912 can be implemented by one or more integrated circuits, logic circuits, FPGAs, microprocessors, CPUs, GPUs, DSPs, and/or microcontrollers from any desired family or manufacturer. The programmable circuitry 912 may be implemented by one or more semiconductor based (e.g., silicon based) devices. In this example, the programmable circuitry 912 implements example hardware identification circuitry 210, example interconnect detection circuitry 220, example firewall generation circuitry 230, example firewall application circuitry 240, example firewall learning circuitry 250, example interconnect communication circuitry 260

The programmable circuitry 912 of the illustrated example includes a local memory 913 (e.g., a cache, registers, etc.). The programmable circuitry 912 of the illustrated example is in communication with main memory 914, 916, which includes a volatile memory 914 and a non-volatile memory 916, by a bus 918. The volatile memory 914 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 916 may be implemented by flash memory and/or any other desired type of memory device. Access to the main memory 914, 916 of the illustrated example is controlled by a memory controller 917. In some examples, the memory controller 917 may be implemented by one or more integrated circuits, logic circuits, microcontrollers from any desired family or manufacturer, or any other type of circuitry to manage the flow of data going to and from the main memory 914, 916.

The programmable circuitry platform 900 of the illustrated example also includes interface circuitry 920. The interface circuitry 920 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 922 are connected to the interface circuitry 920. The input device(s) 922 permit(s) a user (e.g., a human user, a machine user, etc.) to enter data and/or commands into the programmable circuitry 912. The input device(s) 922 can be implemented by, for example, an audio sensor, a microphone, a camera (still or video), a keyboard, a button, a mouse, a touchscreen, a trackpad, a trackball, an isopoint device, and/or a voice recognition system.

One or more output devices 924 are also connected to the interface circuitry 920 of the illustrated example. The output device(s) 924 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 920 of the illustrated example, thus, typically includes a graphics driver card, a graphics driver chip, and/or graphics processor circuitry such as a GPU.

The interface circuitry 920 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 926. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 900 of the illustrated example also includes one or more mass storage discs or devices 928 to store firmware, software, and/or data. Examples of such mass storage discs or devices 928 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 932, which may be implemented by the machine readable instructions of FIGS. 3-6, may be stored in the mass storage device 928, in the volatile memory 914, in the non-volatile memory 916, and/or on at least one non-transitory computer readable storage medium such as a CD or DVD which may be removable.

FIG. 10 is a block diagram of an example implementation of the programmable circuitry 912 of FIG. 9. In this example, the programmable circuitry 912 of FIG. 9 is implemented by a microprocessor 1000. For example, the microprocessor 1000 may be a general-purpose microprocessor (e.g., general-purpose microprocessor circuitry). The microprocessor 1000 executes some or all of the machine-readable instructions of the flowcharts of FIGS. 3-6 to effectively instantiate the circuitry of FIG. 2 as logic circuits to perform operations corresponding to those machine readable instructions. In some such examples, the circuitry of FIG. 2 is instantiated by the hardware circuits of the microprocessor 1000 in combination with the machine-readable instructions. For example, the microprocessor 1000 may be implemented by multi-core hardware circuitry such as a CPU, a DSP, a GPU, an XPU, etc. Although it may include any number of example cores 1002 (e.g., 1 core), the microprocessor 1000 of this example is a multi-core semiconductor device including N cores. The cores 1002 of the microprocessor 1000 may operate independently or may cooperate to execute machine readable instructions. For example, machine code corresponding to a firmware program, an embedded software program, or a software program may be executed by one of the cores 1002 or may be executed by multiple ones of the cores 1002 at the same or different times. In some examples, the machine code corresponding to the firmware program, the embedded software program, or the software program is split into threads and executed in parallel by two or more of the cores 1002. The software program may correspond to a portion or all of the machine readable instructions and/or operations represented by the flowcharts of FIGS. 3-6.

The cores 1002 may communicate by a first example bus 1004. In some examples, the first bus 1004 may be implemented by a communication bus to effectuate communication associated with one(s) of the cores 1002. For example, the first bus 1004 may be implemented by at least one of an Inter-Integrated Circuit (I2C) bus, a Serial Peripheral Interface (SPI) bus, a PCI bus, or a PCIe bus. Additionally or alternatively, the first bus 1004 may be implemented by any other type of computing or electrical bus. The cores 1002 may obtain data, instructions, and/or signals from one or more external devices by example interface circuitry 1006. The cores 1002 may output data, instructions, and/or signals to the one or more external devices by the interface circuitry 1006. Although the cores 1002 of this example include example local memory 1020 (e.g., Level 1 (L1) cache that may be split into an L1 data cache and an L1 instruction cache), the microprocessor 1000 also includes example shared memory 1010 that may be shared by the cores (e.g., Level 2 (L2 cache)) for high-speed access to data and/or instructions. Data and/or instructions may be transferred (e.g., shared) by writing to and/or reading from the shared memory 1010. The local memory 1020 of each of the cores 1002 and the shared memory 1010 may be part of a hierarchy of storage devices including multiple levels of cache memory and the main memory (e.g., the main memory 914, 916 of FIG. 9). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1002 may be referred to as a CPU, DSP, GPU, etc., or any other type of hardware circuitry. Each core 1002 includes control unit circuitry 1014, arithmetic and logic (AL) circuitry (sometimes referred to as an ALU) 1016, a plurality of registers 1018, the local memory 1020, and a second example bus 1022. Other structures may be present. For example, each core 1002 may include vector unit circuitry, single instruction multiple data (SIMD) unit circuitry, load/store unit (LSU) circuitry, branch/jump unit circuitry, floating-point unit (FPU) circuitry, etc. The control unit circuitry 1014 includes semiconductor-based circuits structured to control (e.g., coordinate) data movement within the corresponding core 1002. The AL circuitry 1016 includes semiconductor-based circuits structured to perform one or more mathematic and/or logic operations on the data within the corresponding core 1002. The AL circuitry 1016 of some examples performs integer based operations. In other examples, the AL circuitry 1016 also performs floating-point operations. In yet other examples, the AL circuitry 1016 may include first AL circuitry that performs integer-based operations and second AL circuitry that performs floating-point operations. In some examples, the AL circuitry 1016 may be referred to as an Arithmetic Logic Unit (ALU).

The registers 1018 are semiconductor-based structures to store data and/or instructions such as results of one or more of the operations performed by the AL circuitry 1016 of the corresponding core 1002. For example, the registers 1018 may include vector register(s), SIMD register(s), general-purpose register(s), flag register(s), segment register(s), machine-specific register(s), instruction pointer register(s), control register(s), debug register(s), memory management register(s), machine check register(s), etc. The registers 1018 may be arranged in a bank as shown in FIG. 10. Alternatively, the registers 1018 may be organized in any other arrangement, format, or structure, such as by being distributed throughout the core 1002 to shorten access time. The second bus 1022 may be implemented by at least one of an I2C bus, a SPI bus, a PCI bus, or a PCIe bus.

Each core 1002 and/or, more generally, the microprocessor 1000 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1000 is a semiconductor device fabricated to include many transistors interconnected to implement the structures described above in one or more integrated circuits (ICs) contained in one or more packages.

The microprocessor 1000 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 1000, in the same chip package as the microprocessor 1000 and/or in one or more separate packages from the microprocessor 1000.

FIG. 11 is a block diagram of another example implementation of the programmable circuitry 912 of FIG. 9. In this example, the programmable circuitry 912 is implemented by FPGA circuitry 1100. For example, the FPGA circuitry 1100 may be implemented by an FPGA. The FPGA circuitry 1100 can be used, for example, to perform operations that could otherwise be performed by the example microprocessor 1000 of FIG. 10 executing corresponding machine readable instructions. However, once configured, the FPGA circuitry 1100 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 1000 of FIG. 10 described above (which is a general purpose device that may be programmed to execute some or all of the machine readable instructions represented by the flowchart(s) of FIGS. 3-6 but whose interconnections and logic circuitry are fixed once fabricated), the FPGA circuitry 1100 of the example of FIG. 11 includes interconnections and logic circuitry that may be configured, structured, programmed, and/or interconnected in different ways after fabrication to instantiate, for example, some or all of the operations/functions corresponding to the machine readable instructions represented by the flowchart(s) of FIGS. 3-6. In particular, the FPGA circuitry 1100 may be thought of as an array of logic gates, interconnections, and switches. The switches can be programmed to change how the logic gates are interconnected by the interconnections, effectively forming one or more dedicated logic circuits (unless and until the FPGA circuitry 1100 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 3-6. As such, the FPGA circuitry 1100 may be configured and/or structured to effectively instantiate some or all of the operations/functions corresponding to the machine readable instructions of the flowchart(s) of FIGS. 3-6 as dedicated logic circuits to perform the operations/functions corresponding to those software instructions in a dedicated manner analogous to an ASIC. Therefore, the FPGA circuitry 1100 may perform the operations/functions corresponding to the some or all of the machine readable instructions of FIGS. 3-6 faster than the general-purpose microprocessor can execute the same.

In the example of FIG. 11, the FPGA circuitry 1100 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1100 of FIG. 11 may access and/or load the binary file to cause the FPGA circuitry 1100 of FIG. 11 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1100 of FIG. 11 to cause configuration and/or structuring of the FPGA circuitry 1100 of FIG. 11, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1100 of FIG. 11 may access and/or load the binary file to cause the FPGA circuitry 1100 of FIG. 11 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1100 of FIG. 11 to cause configuration and/or structuring of the FPGA circuitry 1100 of FIG. 11, or portion(s) thereof.

The FPGA circuitry 1100 of FIG. 11, includes example input/output (I/O) circuitry 1102 to obtain and/or output data to/from example configuration circuitry 1104 and/or external hardware 1106. For example, the configuration circuitry 1104 may be implemented by interface circuitry that may obtain a binary file, which may be implemented by a bit stream, data, and/or machine-readable instructions, to configure the FPGA circuitry 1100, or portion(s) thereof. In some such examples, the configuration circuitry 1104 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1106 may be implemented by external hardware circuitry. For example, the external hardware 1106 may be implemented by the microprocessor 1000 of FIG. 10.

The FPGA circuitry 1100 also includes an array of example logic gate circuitry 1108, a plurality of example configurable interconnections 1110, and example storage circuitry 1112. The logic gate circuitry 1108 and the configurable interconnections 1110 are configurable to instantiate one or more operations/functions that may correspond to at least some of the machine readable instructions of FIGS. 3-6 and/or other desired operations. The logic gate circuitry 1108 shown in FIG. 11 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1108 to enable configuration of the electrical structures and/or the logic gates to form circuits to perform desired operations/functions. The logic gate circuitry 1108 may include other electrical structures such as look-up tables (LUTs), registers (e.g., flip-flops or latches), multiplexers, etc.

The configurable interconnections 1110 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1108 to program desired logic circuits.

The storage circuitry 1112 of the illustrated example is structured to store result(s) of the one or more of the operations performed by corresponding logic gates. The storage circuitry 1112 may be implemented by registers or the like. In the illustrated example, the storage circuitry 1112 is distributed amongst the logic gate circuitry 1108 to facilitate access and increase execution speed.

The example FPGA circuitry 1100 of FIG. 11 also includes example dedicated operations circuitry 1114. In this example, the dedicated operations circuitry 1114 includes special purpose circuitry 1116 that may be invoked to implement commonly used functions to avoid the need to program those functions in the field. Examples of such special purpose circuitry 1116 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1100 may also include example general purpose programmable circuitry 1118 such as an example CPU 1120 and/or an example DSP 1122. Other general purpose programmable circuitry 1118 may additionally or alternatively be present such as a GPU, an XPU, etc., that can be programmed to perform other operations.

Although FIGS. 10 and 11 illustrate two example implementations of the programmable circuitry 912 of FIG. 9, many other approaches are contemplated. For example, FPGA circuitry may include an on-board CPU, such as one or more of the example CPU 1120 of FIG. 10. Therefore, the programmable circuitry 912 of FIG. 9 may additionally be implemented by combining at least the example microprocessor 1000 of FIG. 10 and the example FPGA circuitry 1100 of FIG. 11. In some such hybrid examples, one or more cores 1002 of FIG. 10 may execute a first portion of the machine readable instructions represented by the flowchart(s) of FIGS. 3-6 to perform first operation(s)/function(s), the FPGA circuitry 1100 of FIG. 11 may be configured and/or structured to perform second operation(s)/function(s) corresponding to a second portion of the machine readable instructions represented by the flowcharts of FIG. 3-6, and/or an ASIC may be configured and/or structured to perform third operation(s)/function(s) corresponding to a third portion of the machine readable instructions represented by the flowcharts of FIGS. 3-6.

It should be understood that some or all of the circuitry of FIG. 2 may, thus, be instantiated at the same or different times. For example, same and/or different portion(s) of the microprocessor 1000 of FIG. 10 may be programmed to execute portion(s) of machine-readable instructions at the same and/or different times. In some examples, same and/or different portion(s) of the FPGA circuitry 1100 of FIG. 11 may be configured and/or structured to perform operations/functions corresponding to portion(s) of machine-readable instructions at the same and/or different times.

In some examples, some or all of the circuitry of FIG. 2 may be instantiated, for example, in one or more threads executing concurrently and/or in series. For example, the microprocessor 1000 of FIG. 10 may execute machine readable instructions in one or more threads executing concurrently and/or in series. In some examples, the FPGA circuitry 1100 of FIG. 11 may be configured and/or structured to carry out operations/functions concurrently and/or in series. Moreover, in some examples, some or all of the circuitry of FIG. 2 may be implemented within one or more virtual machines and/or containers executing on the microprocessor 1000 of FIG. 10.

In some examples, the programmable circuitry 912 of FIG. 9 may be in one or more packages. For example, the microprocessor 1000 of FIG. 10 and/or the FPGA circuitry 1100 of FIG. 11 may be in one or more packages. In some examples, an XPU may be implemented by the programmable circuitry 912 of FIG. 9, which may be in one or more packages. For example, the XPU may include a CPU (e.g., the microprocessor 1000 of FIG. 10, the CPU 1120 of FIG. 11, etc.) in one package, a DSP (e.g., the DSP 1122 of FIG. 11) in another package, a GPU in yet another package, and an FPGA (e.g., the FPGA circuitry 1100 of FIG. 11) in still yet another package.

A block diagram illustrating an example software distribution platform 1205 to distribute software such as the example machine readable instructions 932 of FIG. 9 to other hardware devices (e.g., hardware devices owned and/or operated by third parties from the owner and/or operator of the software distribution platform) is illustrated in FIG. 12. The example software distribution platform 1205 may be implemented by any computer server, data facility, cloud service, etc., capable of storing and transmitting software to other computing devices. The third parties may be customers of the entity owning and/or operating the software distribution platform 1205. For example, the entity that owns and/or operates the software distribution platform 1205 may be a developer, a seller, and/or a licensor of software such as the example machine readable instructions 932 of FIG. 9. The third parties may be consumers, users, retailers, OEMs, etc., who purchase and/or license the software for use and/or re-sale and/or sub-licensing. In the illustrated example, the software distribution platform 1205 includes one or more servers and one or more storage devices. The storage devices store the machine readable instructions 932, which may correspond to the example machine readable instructions of FIGS. 3-6, as described above. The one or more servers of the example software distribution platform 1205 are in communication with an example network 1210, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 932 from the software distribution platform 1205. For example, the software, which may correspond to the example machine readable instructions of FIG. 3-6, may be downloaded to the example programmable circuitry platform 900, which is to execute the machine readable instructions 932 to implement the firewall orchestration circuitry 130. In some examples, one or more servers of the software distribution platform 1205 periodically offer, transmit, and/or force updates to the software (e.g., the example machine readable instructions 932 of FIG. 9) to ensure improvements, patches, updates, etc., are distributed and applied to the software at the end user devices. Although referred to as software above, the distributed "software" could alternatively be firmware.

From the foregoing, it will be appreciated that example systems, apparatus, articles of manufacture, and methods have been disclosed that generates and manages a firewall policy which can be deployed at an interconnect level of a compute device. Disclosed systems, apparatus, articles of manufacture, and methods improve the efficiency of using a computing device by dynamically generating and managing firewall policies to ensure cyber-attacks are mitigated and firewall polices are updated to address the cyber-attacks Disclosed systems, apparatus, articles of manufacture, and methods are accordingly directed to one or more improvement(s) in the operation of a machine such as a computer or other electronic and/or mechanical device.

Example methods, apparatus, systems, and articles of manufacture to generate and manage a firewall policy which can be deployed at an interconnect level of a compute device are disclosed herein. Further examples and combinations thereof include the following:
Example 1 includes an apparatus comprising interface circuitry, machine readable instructions, and programmable circuitry to at least one of instantiate or execute the machine readable instructions to determine whether an operation is allowed to pass between a first component on a system-on-chip (SoC) and a second component on the SoC, detect an interconnect between the first component on the SoC and the second component on the SoC, the interconnect to filter the operation based on the determination of whether the operation is allowed to pass between the first component and the second component, and transmit a request to filter the operation based on the determination of whether the operation is allowed to pass between the first component and the second component.
Example 2 includes the apparatus of example 1, wherein the operation is associated with an application, and the programmable circuitry is to generate a firewall policy for the application based on the determination of whether the operation is allowed to pass between the first component and the second component.
Example 3 includes the apparatus of example 2, wherein the programmable circuitry is to train a machine learning model based on executing the operation to generate a subsequent firewall policy.
Example 4 includes the apparatus of example 3, wherein to train the machine learning model, the programmable circuitry is to analyze a previous iteration of the firewall policy to identify whether to restrict a previously allowed operation from passing between the first component and the second component.
Example 5 includes the apparatus of example 1, wherein the programmable circuitry is to determine whether the operation is allowed to pass based on at least one of a quantity of computing resources available or detection of an unauthorized operation.
Example 6 includes the apparatus of example 1, wherein the first component is at least one of a first processor core or a first memory module and the second component is at least one of a second processor core or a second memory module.
Example 7 includes the apparatus of example 1, wherein the interconnect defines a communication path between the first component and the second component, the programmable circuitry to determine whether the operation is to be passed at the interconnect.
Example 8 includes an apparatus comprising a first component, a second component, machine readable instructions, and programmable circuitry to at least one of instantiate or execute the machine readable instructions to retrieve a request to filter an operation, the request indicating whether the operation is allowed to pass between the first component and the second component, and perform a filtering action on the operation, the filtering action to at least one of block or allow the operation to pass between the first component and the second component based on the request.
Example 9 includes the apparatus of example 8, wherein the programmable circuitry is to analyze the request to determine whether to block the operation.
Example 10 includes the apparatus of example 8, further including an interconnect, the interconnect to define a communication path between the first component and the second component.
Example 11 includes the apparatus of example 10, wherein the programmable circuitry is to perform the filtering operation on the interconnect.
Example 12 includes the apparatus of example 10, wherein the programmable circuitry is to transmit an indication representative of at least one of a location or an amount of interconnects.
Example 13 includes the apparatus of example 8, wherein the first component is at least one of a first processor core or a first memory module and the second component is at least one of a second processor core or a second memory module.
Example 14 includes a non-transitory machine readable storage medium comprising instructions to cause programmable circuitry to at least determine whether an operation is allowed to pass between a first component on a system-on-chip (SoC) and a second component on the SoC, detect an interconnect between the first component on the SoC and the second component on the SoC, the interconnect to filter the operation based on the determination of whether the operation is allowed to pass between the first component and the second component, and transmit a request to filter the operation based on the determination of whether the operation is allowed to pass between the first component and the second component.
Example 15 includes the non-transitory machine readable storage medium of example 14, wherein the operation is associated with an application, wherein the instructions cause the programmable circuitry to generate a firewall policy for the application based on the determination of whether the operation is allowed to pass between the first component and the second component.
Example 16 includes the non-transitory machine readable storage medium of example 15, wherein the instructions cause the programmable circuitry to train a machine learning model based on executing the operation to generate a subsequent firewall policy.
Example 17 includes the non-transitory machine readable storage medium of example 16, wherein, to train the machine learning model, the instructions cause the programmable circuitry to analyze a previous iteration of the firewall policy to identify whether to restrict a previously allowed operation from passing between the first component and the second component.
Example 18 includes the non-transitory machine readable storage medium of example 14, wherein the instructions cause the programmable circuitry to determine whether the operation is allowed to pass based on at least one of a quantity of computing resources available or detection of an unauthorized operation.
Example 19 includes the non-transitory machine readable storage medium of example 14, wherein the first component is at least one of a first processor core or a first memory module and the second component is at least one of a second processor core or a second memory module.
Example 20 includes the non-transitory machine readable storage medium of example 14, wherein the interconnect defines a communication path between the first component and the second component, the programmable circuitry to determine whether the operation is to be passed at the interconnect.
Example 21 includes a method comprising determining whether an operation is allowed to pass between a first component on a system-on-chip (SoC) and a second component on the SoC, detecting an interconnect between the first component on the SoC and the second component on the SoC, the interconnect to filter the operation based on the determination of whether the operation is allowed to pass between the first component and the second component, and transmitting a request to filter the operation based on the determination of whether the operation is allowed to pass between the first component and the second component.
Example 22 includes the method of example 21, further including generating a firewall policy for an application associated with the operation based on the determination of whether the operation is allowed to pass between the first component and the second component.
Example 23 includes the method of example 22, further including training a machine learning model based on executing the operation to generate a subsequent firewall policy.
Example 24 includes the method of example 23, further including analyzing a previous iteration of the firewall policy to identify whether to restrict a previously allowed operation from passing between the first component and the second component.
Example 25 includes the method of example 21, further including determining whether the operation is allowed to pass based on at least one of a quantity of computing resources available or detection of an unauthorized operation.
Example 26 includes the method of example 21, wherein the first component is at least one of a first processor core or a first memory module and the second component is at least one of a second processor core or a second memory module.
Example 27 includes the method of example 21, wherein the interconnect defines a communication path between the first component and the second component.
Example 28 includes an apparatus comprising means for determining whether an operation is allowed to pass between a first component on a system-on-chip (SoC) and a second component on the SoC, means for detecting an interconnect between the first component on the SoC and the second component on the SoC, the interconnect to filter the operation based on the determination of whether the operation is allowed to pass between the first component and the second component, and means for transmitting a request to filter the operation based on the determination of whether the operation is allowed to pass between the first component and the second component.
Example 29 includes the apparatus of example 28, further including means for generating a firewall policy for an application associated with the operation based on the determination of whether the operation is allowed to pass between the first component and the second component.
Example 30 includes the apparatus of example 29, further including means for training a machine learning model based on executing the operation to generate a subsequent firewall policy.
Example 31 includes the apparatus of example 30, wherein the means for training is to analyze a previous iteration of the firewall policy to identify whether to restrict a previously allowed operation from passing between the first component and the second component.
Example 32 includes the apparatus of example 28, wherein the means for determining is to determine whether the operation is allowed to pass based on at least one of a quantity of computing resources available or detection of an unauthorized operation.
Example 33 includes the apparatus of example 28, wherein the interconnect defines a communication path between the first component and the second component.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. A method comprising:
determining whether an operation is allowed to pass between a first component on a system-on-chip (SoC) and a second component on the SoC;
detecting an interconnect between the first component on the SoC and the second component on the SoC;
causing the interconnect to filter the operation based on the determination of whether the operation is allowed to pass between the first component and the second component; and
transmitting a request to filter the operation based on the determination of whether the operation is allowed to pass between the first component and the second component.

2. The method of claim 1, wherein the operation is associated with an application, and further includes generating a firewall policy for the application based on the determination of whether the operation is allowed to pass between the first component and the second component.

3. The method of any preceding claim, further including training a machine learning model based on executing the operation to generate a subsequent firewall policy.

4. The method of claim 3, wherein training the machine learning model further includes analyzing a previous iteration of the firewall policy to identify whether to restrict a previously allowed operation from passing between the first component and the second component.

5. The method of any preceding claim, further including determining whether the operation is allowed to pass based on at least one of a quantity of computing resources available or detection of an unauthorized operation.

6. The method of any preceding claim, wherein the first component is at least one of a first processor core or a first memory module and the second component is at least one of a second processor core or a second memory module.

7. The method of any preceding claim, wherein the interconnect defines a communication path between the first component and the second component, and further includes determining whether the operation is to be passed at the interconnect.

8. An apparatus comprising:
a first component;
a second component, the second component communicatively coupled to the first component via an interconnect;
machine readable instructions; and
programmable circuitry to at least one of instantiate or execute the machine readable instructions to:
retrieve a request to filter an operation, the request indicating whether the operation is allowed to pass between the first component and the second component; and
perform a filtering action on the operation, the filtering action to at least one of block or allow the operation to pass between the first component and the second component at the interconnect based on the request.

9. The apparatus of claim 8, wherein the programmable circuitry is to analyze the request to determine whether to block the operation.

10. The apparatus of any preceding claim, further including an interconnect, the interconnect to define a communication path between the first component and the second component.

11. The apparatus of claim 10, wherein the programmable circuitry is to perform the filtering operation on the interconnect.

12. The apparatus of claims 10 or 11, wherein the programmable circuitry is to transmit an indication representative of at least one of a location or an amount of interconnects.

13. The apparatus of any preceding claim, wherein the first component is at least one of a first processor core or a first memory module and the second component is at least one of a second processor core or a second memory module.

14. A machine readable storage medium comprising instructions to cause programmable circuitry to at least:
determine whether an operation is allowed to pass between a first component on a system-on-chip (SoC) and a second component on the SoC;
detect an interconnect between the first component on the SoC and the second component on the SoC;
cause the interconnect to filter the operation based on the determination of whether the operation is allowed to pass between the first component and the second component; and
transmit a request to filter the operation based on the determination of whether the operation is allowed to pass between the first component and the second component.

15. The machine readable storage medium of claim 14, wherein the operation is associated with an application, wherein the instructions cause the programmable circuitry to generate a firewall policy for the application based on the determination of whether the operation is allowed to pass between the first component and the second component.
